# EUROPÄISCHE PATENTANMELDUNG

(11) **EP 3 832 852 A1**
(43) Veröffentlichungstag der Anmeldung: **09.06.2021**
(21) Anmeldenummer: 19213514.3
(22) Anmeldetag: 04.12.2019
(51) Int. Cl.: H02K 1/28

(54) **VERBINDUNG ROTORWELLE ZU BLECHPAKET**

(71) Anmelder: Hilti Aktiengesellschaft, 9494 Schaan (LI)
(72) Erfinder: Artmann, Konrad, 86938 Schondorf (DE); Dietl, Lothar, 86916 Kaufering (DE); Schmid, Tobias, 86875 Emmenhausen (DE); Burger, Helmut, 86944 Unterdießen (DE)
(74) Vertreter: Hilti Aktiengesellschaft Corporate Intellectual Property

(57) **Zusammenfassung**

Rotor für einen Elektromotor, mit einer Rotorwelle und ein an der Rotorwelle angebrachtes Rotorpaket mit einer Anzahl von entlang einer Achse des Rotorpakets angeordneten Paketblechen.

Jedes Paketblech enthält eine zentrale von der Rotorwelle durchsetzte, eine Kontur aufweisende Ausnehmung, welche wenigstens zwei sich radial erstreckende Erhebungen sowie wenigstens zwei zwischen den Erhebungen positionierte Aussparungen enthält, wobei zur Bildung einer Presspassung der Paketbleche an der Rotorwelle eine Wegstrecke zwischen den freien Enden der Erhebungen kleiner ist als ein Durchmesser der Rotorwelle und wobei sich durch die jeweilige Aussparung der hintereinander angeordneten Paketbleche ein peripher an der Rotorwelle erstreckender Kanal bildet.

## Beschreibung

Die vorliegende Erfindung betrifft einen Rotor für einen Elektromotor, mit einer Rotorwelle und ein an der Rotorwelle angebrachtes Rotorpaket mit einer Anzahl von entlang einer Achse des Rotorpakets angeordneten Paketblechen.

Darüber hinaus betrifft die vorliegende Erfindung einen Elektromotor mit einem Rotor.

Elektromotoren, insbesondere bürstenlose Elektromotoren, mit einem Stator sowie einem sich in dem Stator drehenden Rotor sind durch den Stand der Technik weitgehend bekannt. Die deutsche Patentanmeldung DE 102010031399 A1 zeigt beispielsweise einen Rotor gemäß dem Stand der Technik.

Ein Rotor für einen Elektromotor besteht für gewöhnlich aus einer Anzahl an hintereinander angeordneten Paketblechen zur Bildung eines sogenannten Blechpakets und einer Rotorwelle, die durch eine zentrale Öffnung des Blechpakets positioniert ist. Die Paketbleche und die Rotorwelle sind dabei verdrehsicher miteinander verbunden. Die Verbindung geschieht dabei zumeist über einen radiale Presssitz bzw. Presspassung der Rotorwelle in den Blechpaket.

Die Rotorwelle muss jedoch bei abrupten Bremsvorgängen oder hohen Drehmomentstößen des Elektromotors teilweise hohe Torsionslasten zum Blechpaket übertragen. Radialer Presssitz kann bei hohen Torsions-Lastspitzen und bei ungünstigen Toleranzpaarungen zum Durchrutschen führen. Dies führt zu einer Leistungsreduktion des Elektromotors.

Darüber hinaus besteht bei vielen Elektromotoren gemäß dem Stand der Technik das Problem, dass magnetische Feldlinien bei einem um die Mantelfläche der Rotorwelle laufendem, metallischem Presssitzkontakt von den Rotorblechen bis in die Rotorwelle eindringen. Hierdurch kann es durch axial verlaufende Wirbelströme zu Leitungsverlusten des Elektromotors kommen.

Aufgabe der vorliegenden Erfindung ist es daher, einen Rotor für einen Elektromotor sowie einen Elektromotor bereitzustellen, mit dem die vorstehend genannten Problem gelöst und Leistungsverluste vermindert werden können.

Die Aufgabe wird entsprechend gelöst durch den Gegenstand des unabhängigen Anspruchs 1 und 4. Weitere vorteilhafte Ausgestaltungsformen der Erfindung finden sich in den entsprechenden Unteransprüchen.

Die Aufgabe wird insbesondere gelöst durch einen Rotor für einen Elektromotor, mit einer Rotorwelle und ein an der Rotorwelle angebrachtes Rotorpaket mit einer Anzahl von entlang einer Achse des Rotorpakets angeordneten Paketblechen.

Erfindungsgemäß enthält jedes Paketblech eine zentrale von der Rotorwelle durchsetzte, eine Kontur aufweisende Ausnehmung enthält, welche wenigstens zwei sich radial erstreckende Erhebungen sowie wenigstens zwei zwischen den Erhebungen positionierte Aussparungen enthält, wobei zur Bildung einer Presspassung der Paketbleche an der Rotorwelle eine Wegstrecke zwischen den freien Enden der Erhebungen kleiner ist als ein Durchmesser der Rotorwelle und wobei sich durch die jeweilige Aussparung der hintereinander angeordneten Paketbleche ein peripher an der Rotorwelle erstreckender Kanal bildet.

Durch die Aussparungen wird der Presssitzkontakt zwischen Rotorwelle und Blechpaket mehrfach unterbrochen. In diesen Unterbrechungen, welche auch als Lufttaschen bezeichnet werden können, werden die magnetischen Feldlinien des Paketblechen zur Rotorwelle hin abgeschirmt. Das Eindringen der magnetischen Feldlinien von den Paketblechen in die Rotorwelle wird hierdurch vermindert. Zum anderen existiert durch die Aussparungen und die hierdurch erzeugten Kanäle zwischen den Paketblechen und der Rotorwelle die Möglichkeit, flüssigen Kunststoff zwischen den Paketblechen und der Rotorwelle einzuführen und somit eine form- sowie stoffschlüssige Verbindung bei geeigneter Gegenkontur in der Rotorwelle zu erzeugen.

Es ist dabei möglich, dass der Rotor für einen Elektromotor einer Werkzeugmaschine, insbesondere ein Bohrhammer, eine Säge, ein Schleifgerät oder dergleichen, vorgesehen ist.

Gemäß einer vorteilhaften Ausführungsform der vorliegenden Erfindung kann es möglich sein, dass vier zwischen den Erhebungen positionierte Aussparungen enthalten sind, wobei die vier Aussparungen entlang der Achse im Wesentlichen jeweils um 90° gedreht zueinander sind. Weiterhin sind auch andere Kombinationen von Winkeln und Anzahl von Aussparungen möglich.

Entsprechend einem weiteren vorteilhaften Ausführungsbeispiel der vorliegenden Erfindung kann es möglich sein, dass drei zwischen den Erhebungen positionierte Aussparungen enthalten sind, wobei die drei Aussparungen entlang der Achse im Wesentlichen jeweils um 120° gedreht zueinander sind.

Entsprechend einem weiteren vorteilhaften Ausführungsbeispiel der vorliegenden Erfindung kann es möglich sein, dass die Rotorwelle wenigstens eine spiralförmig um eine Mantelfläche verlaufende Nut enthält. Durch Füllung mit Kunststoff kann auf relativ einfache Art und Weise die Verbindung zwischen den Paketblechen und der Rotorwelle gegen Verdrehen gesichert werden.

Des Weiteren wird die Aufgabe insbesondere gelöst durch einen Elektromotor mit einem Rotor der eingangs genannten Art und Merkmalen.

Es ist dabei möglich, dass der Elektromotor als bürstenloser Elektromotor ausgestaltet ist.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine perspektivische Ansicht auf einen Rotor mit einer Anzahl an Paketblechen und einer Rotorwelle;
- Figur 2a: eine frontale Ansicht auf den Rotor mit der Rotorwelle und den Paketblechen gemäß einer ersten Ausführungsform;
- Figur 2b: eine frontale Ansicht auf ein Paketblech gemäß einer zweiten Ausführungsform;
- Figur 3: eine perspektivische Ansicht auf eine Rotorwelle;

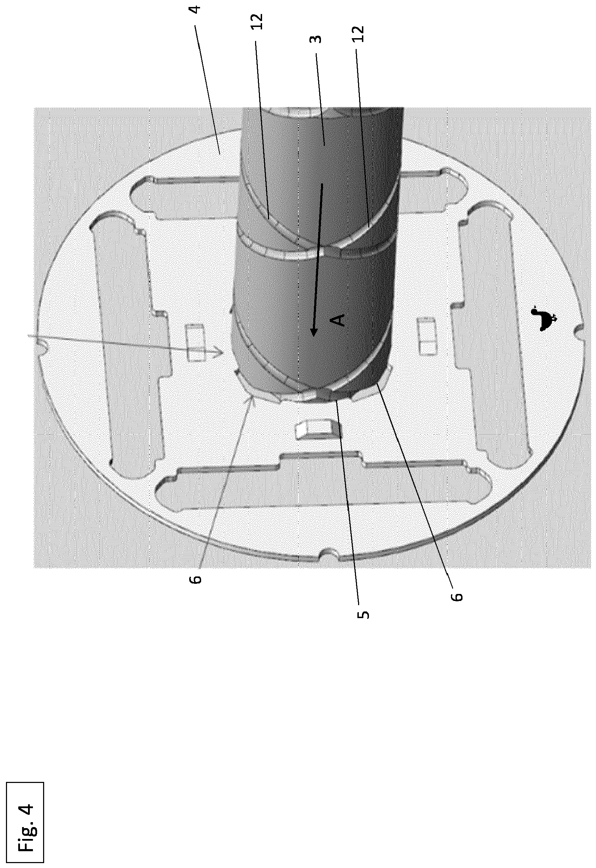

- Figur 4: eine perspektivische Ansicht auf ein einzelnes Paketblech auf der Rotorwelle; und
- Figur 5: eine perspektivische Schnittansicht durch einen Rotor mit zwischen den Paketblechen und der Rotorwelle eingespritztem Kunststoff.

### Ausführungsbeispiele:

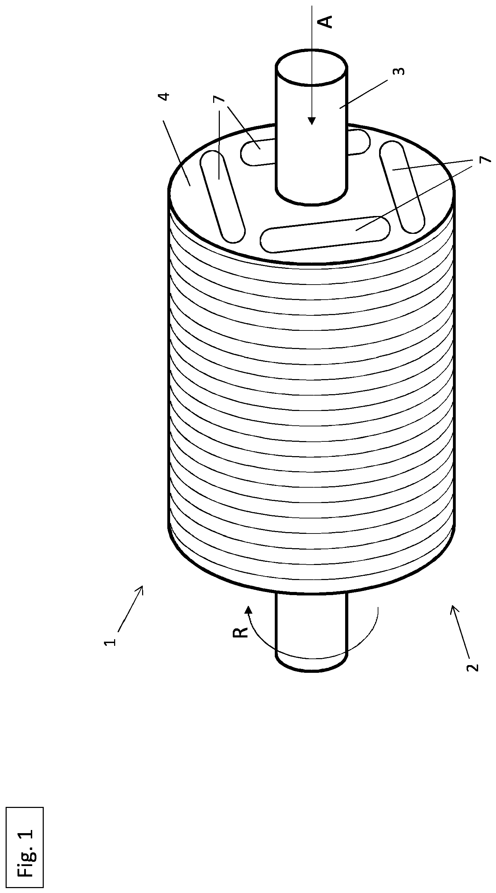

In Figur 1 zeigt eine schematische Darstellung eines erfindungsgemäßen Rotors 1 für einen Elektromotor. Der Elektromotor kann wiederum als Antrieb zum Erzeugen eines Drehmoments in einer Werkzeugmaschine dienen. Die Werkzeugmaschine kann dabei als Bohrmaschine, Bohrhammer, Säge, Schleifgerät oder dergleichen ausgestaltet sein. Weder der Elektromotor noch die Werkzeugmaschine sind in den Figuren dargestellt.

Der Rotor 1 enthält dabei im Wesentlichen ein Rotorblechpaket 2 (auch nur Blechpaket genannt) sowie eine Rotorwelle 3.

Wie in Figur 1 erkennbar, sind zur Bildung eines zylindrischen Rotorblechpakets 2 mehrere Paketbleche 4 hintereinander in Pfeilrichtung A positioniert.

Die Rotorwelle 3 ist im Wesentlichen zylindrisch ausgestaltet. Die Rotorwelle 3 weist einen gleichmässigen Durchmesser D2 auf.

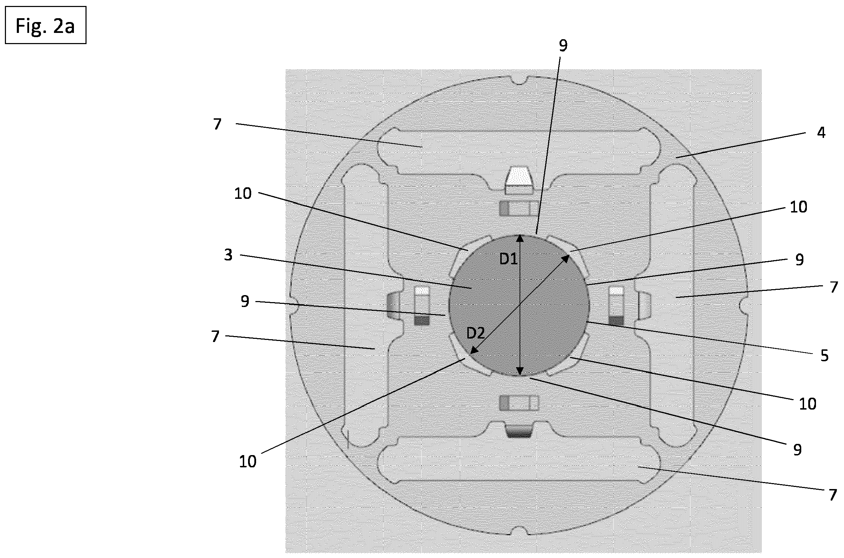

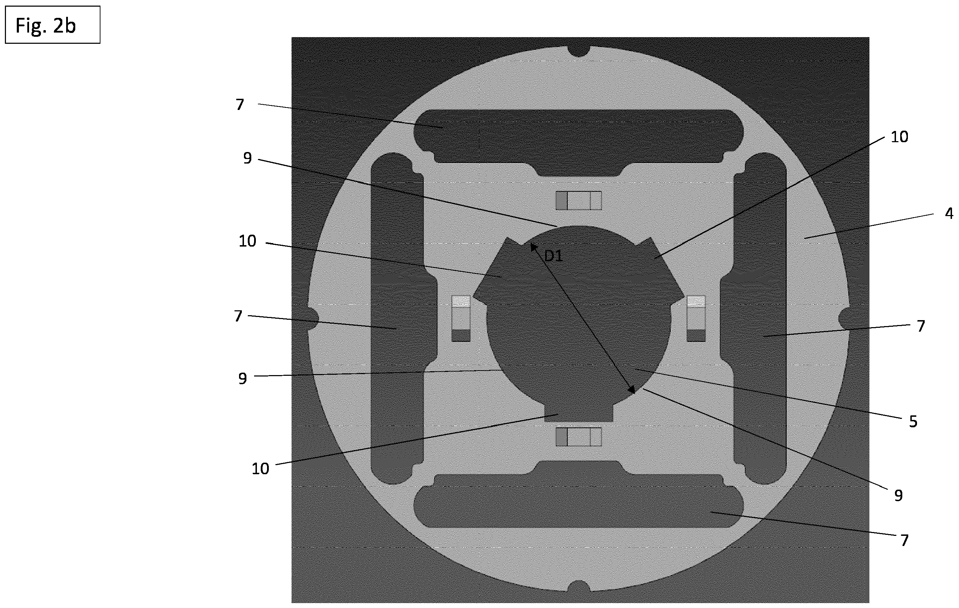

Figur 2a zeigt ein Paketblech 4 gemäß einer ersten Ausführungsform und Figur 2b zeigt ein Paketblech 4 gemäß einer zweiten Ausführungsform.

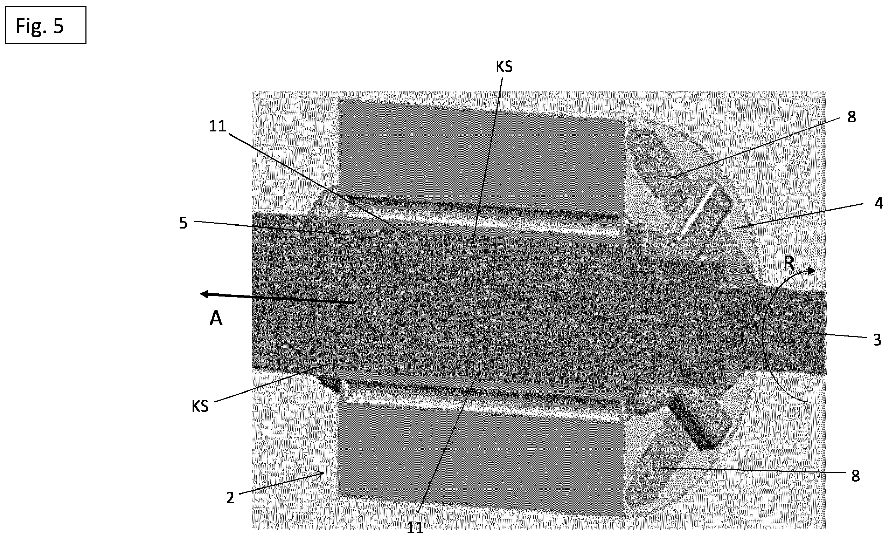

Jedes einzelne Paketblech 4 enthält im Wesentlichen eine zentrale Ausnehmung 5 sowie mehrere Aussparungen 7. Das Paketblech 4 gemäß der ersten und zweiten Ausführungsform (vgl. Fig. 2a, 2b) enthält jeweils vier Aussparungen 7. Die vier Aussparungen 7 sind kreisförmig um die zentrale Ausnehmung 5 angeordnet und dienen jeweils zur Aufnahme eines Magneten 8. Bei den Magneten 8 kann es sich um Permanentmagnete handeln. Die Magnete 8 sind in Figur 5 angedeutet.

Das Paketblech 4 gemäß der ersten Ausführungsform enthält eine erste, zweite, dritte sowie vierte Erhebung 9 um die zentrale Ausnehmung 5 herum, vgl. Figur 2a. Das Paketblech 4 gemäß der zweiten Ausführungsform enthält eine erste, zweite und dritte Erhebung 9 um die zentrale Ausnehmung 5 herum, vgl. Figur 2b. Die Erhebung 9 kann auch als Steg bezeichnet werden. Jede Erhebung 9 weist dabei ein erstes Ende 9a und ein zweites Ende 9b auf. Mit dem ersten Ende 9a ist die Erhebung 9 an der inneren Kreismantelfläche der zentralen Ausnehmung 5 positioniert. Das zweite Ende 9b einer jeden Erhebung 5, welches auch als freies Ende 9b bezeichnet werden kann, erstreckt sich in radialer Richtung zur Mitte der zentralen Ausnehmung 5 des Paketblechs 4. Somit erstreckt sich auch jede Erhebung 9 in radialer Richtung zur Mitte der zentralen Ausnehmung 5.

Wie in Figur 2a bei dem Paketblech gemäß der ersten Ausführungsform erkennbar sind jeweils zwei Erhebungen 9 gegenüberliegend um die zentrale Ausnehmung 5 positioniert. Die Erhebung 9 sind dabei jeweils 90° zueinander verdreht um die innere Kreismantelfläche der zentralen Ausnehmung 5 positioniert.

Wie in Figur 2b bei dem Paketblech gemäß der zweiten Ausführungsform erkennbar sind drei Erhebungen radial um die zentrale Ausnehmung positioniert. Die Erhebung sind dabei jeweils 120° zueinander verdreht um die innere Kreismantelfläche der zentralen Ausnehmung positioniert.

Wie bereits vorstehend erwähnt, werden die einzelnen Paketbleche in Richtung A hintereinander positioniert bzw. angeordnet, um das zylindrische Rotorblechpaket zu bilden. Die Rotorwelle wird durch die zentrale Ausnehmung der einzelnen Paketbleche geschoben und dort positioniert. sodass der Rotor gebildet wird.

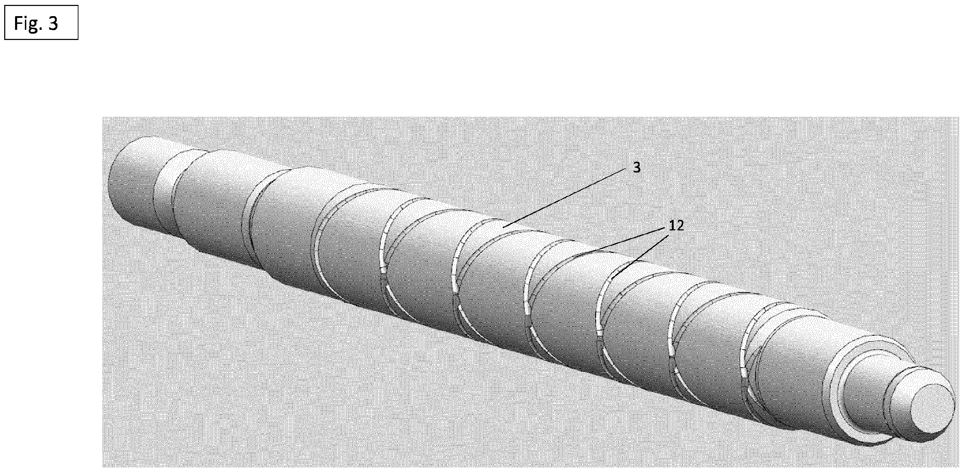

In Figur 3 ist die Rotorwelle dargestellt. Wie zu erkennen ist sind zwei spiralförmige Vertiefungen an der Mantelfläche bzw. an der Oberfläche vorgesehen. Die Vertiefung kann auch als Nut bezeichnet werden. Gemäß einer alternativen Ausgestaltungsform weist die Rotorwelle keine spiralförmig verlaufende, sondern punktuelle, kreisförmige, längliche oder ringförmige Vertiefungen auf.

Die Wegstrecke D1 bzw. Distanz zwischen den zweiten Enden 9b der Erhebungen 9 ist dabei kleiner als der Durchmesser D2 der Rotorwelle 3. Dadurch, dass die Wegstrecke D1 zwischen den zweiten Enden 9b der Erhebungen 9 kleiner ist als der Durchmesser D2 der Rotorwelle 3 muss die Rotorwelle 3 mit einem gewissen Kraftaufwand in Richtung A durch die zentrale Ausnehmung 5 der Paketbleche 4 gedrückt werden. Wenn die Rotorwelle 3 in der zentralen Ausnehmung 5 der Paketbleche 4 positioniert ist, sind die Erhebungen 9 um einen gewissen Betrag aufgeweitet. Die Rotorwelle 3 befindet sich damit in einem Presssitz bzw. in einem Presskontakt zu den Paketblechen 4. Durch den hierdurch erzeugten Presskontakt kann eine Torsion der Rotorwelle 3 zu den Paketblechen 2 verhindert werden.

Gemäß einer alternativen Ausgestaltungsform der vorliegenden Erfindung 9 können auch mehr oder weniger als drei oder vier Erhebungen 9 an dem jeweiligen Paketblech 4 vorgesehen sein. Falls eine gerade Anzahl an Erhebungen 9 gewählt werden, sind immer jeweils zwei Erhebungen 9 gegenüberliegend positioniert bzw. angeordnet. Eine Symmetrie der Erhebungen 9 wird dabei angestrebt.

Wie ebenfalls in den Figuren erkennbar, ist an jedem Paketblech 4 zwischen jeweils zwei benachbarten Erhebungen 9 eine Aussparung 10 vorgesehen.
Es sind bei dem Paketblech 4 gemäß der ersten Ausführungsform eine erste, zweite, dritte und vierte Aussparung 10 enthalten. Wie auch die Erhebungen 9 sind auch die Aussparungen 10 jeweils 90° zueinander verdreht um die innere Kreismantelfläche der zentralen Ausnehmung 5 positioniert. Eine Erhebung 9 und eine benachbarte Aussparung 10 sind dabei jeweils 45° zueinander gedreht angeordnet.

Bei dem Paketblech 4 gemäß der zweiten Ausführungsform eine erste, zweite und dritte Aussparung 10 enthalten. Wie auch die Erhebungen 9 sind auch die Aussparungen 10 jeweils 120° zueinander verdreht um die innere Kreismantelfläche der zentralen Ausnehmung 5 positioniert.

Dadurch, dass die Paketbleche 4 zur Bildung eines Rotorblechpakets 2 in Richtung A hintereinander positioniert sind und die Aussparungen 7 eines jeden Paketbleches 4 ebenfalls in Richtung A hintereinander positioniert sind, bilden sich um die Mantelfläche der Rotorwelle 3 gleichmässig verteilte Kanäle 11 in den Aussparungen 10. Die Kanäle 11 sind dabei zwischen der inneren Kreismantelfläche der zentralen Ausnehmung 5 der Paketbleche 4 und der äußeren Mantelfläche der Rotorwelle 3 positioniert und erstrecken sich über die gesamte Länge des Rotorblechpakets 2.

Wie Figur 5 zu entnehmen ist, kann in die jeweiligen Kanäle 11 flüssiger Kunststoff KS eingeführt werden. Als Kunststoff KS kann ein Duroplast-Kunststoff verwendet werden. Zur Einführung des flüssigen Kunststoffs KS kann ein Spritzpressverfahren verwendet werden. Der eingespritzte und schließlich ausgehärtete Kunststoff KS dient als partiell form- und kraftschlüssige Verbindung zwischen den Paketblechen 4 und der Rotorwelle 3, sodass ein mögliches Verdrehen der Rotorwelle 3 zu den Paketblechen 4 vermindert werden kann, wenn sich der Rotor 1 in Drehrichtung R dreht.

Gemäß einer weiteren vorteilhaften Ausführungsform der vorliegenden Erfindung kann die Rotorwelle 3 auch eine spiralförmig um eine Mantelfläche der Rotorwelle 3 verlaufende Nut 12 enthalten, vgl. Figur 3. Durch diese Nut ist die Mantelfläche der Rotorwelle 3 durchbrochen, sodass eine höhere Haftung der Paketbleche 4 an der Rotorwelle erzeugt wird. Darüber hinaus dient die umlaufende Nut 12 auch dazu, dass der flüssig eingespritzte Kunststoff KS zwischen Paketblechen 4 und Rotorwelle 3 besser anhaftet.

Diese Nut 12 erzeugt in Verbindung mit den Aussparungen 10 im Blechpaket 2 durch Füllung mit Kunststoff KS die Funktion einer Verdrehsicherung.

## Patentansprüche

1. Rotor (1) für einen Elektromotor, mit einer Rotorwelle (3) und ein an der Rotorwelle (3) angebrachtes Rotorpaket (2) mit einer Anzahl von entlang einer Achse (A) des Rotorpakets (2) angeordneten Paketblechen (4),
**dadurch gekennzeichnet, dass** jedes Paketblech (4) eine zentrale von der Rotorwelle (3) durchsetzte, eine Kontur aufweisende Ausnehmung (10) enthält, welche wenigstens zwei sich radial erstreckende Erhebungen (9) sowie wenigstens zwei zwischen den Erhebungen (9) positionierte Aussparungen (10) enthält, wobei zur Bildung einer Presspassung der Paketbleche (4) an der Rotorwelle (3) eine Wegstrecke (D1) zwischen den freien Enden (2b) der Erhebungen (9) kleiner ist als ein Durchmesser (D2) der Rotorwelle (3) und wobei sich durch die jeweilige Aussparung (10) der hintereinander angeordneten Paketbleche (4) ein peripher an der Rotorwelle (4) erstreckender Kanal (11) bildet.

2. Rotor (1) eines Elektromotors nach Anspruch 1,
**dadurch gekennzeichnet, dass** vier zwischen den Erhebungen (9) positionierte Aussparungen (10) enthalten sind, wobei die vier Aussparungen (10) entlang der Achse (A) im Wesentlichen jeweils um 90° gedreht zueinander sind.

3. Rotor (1) eines Elektromotors nach Anspruch 1,
**dadurch gekennzeichnet, dass** drei zwischen den Erhebungen (9) positionierte Aussparungen (10) enthalten sind, wobei die drei Aussparungen (10) entlang der Achse (A) im Wesentlichen jeweils um 120° gedreht zueinander sind.

4. Rotor (1) eines Elektromotors nach wenigstens einem der Ansprüche 1 bis 3,
**dadurch gekennzeichnet, dass** die Rotorwelle (3) wenigstens eine spiralförmig um eine Mantelfläche verlaufende Nut (12) enthält.

5. Elektromotor mit einem Rotor (1) nach wenigstens einem der Ansprüche 1 bis 4.
